# EUROPEAN PATENT APPLICATION

(11) **EP 4 686 307 A1**
(43) Date of publication of application: **28.01.2026**
(21) Application number: 25190373.8
(22) Date of filing: 18.07.2025
(51) Int. Cl.: H04W 74/0808, H04W 74/0816

(54) **CONCURRENT ACCESS TO A COMMUNICATION CHANNEL**

(30) Priority: 24.07.2024 GB 202410844
(71) Applicant: Nokia Technologies Oy, 02610 Espoo (FI)
(72) Inventor: WILHELMI, Francisco, Gerlingen (DE); GALATI GIORDANO, Lorenzo, Stuttgart (DE); FONTANESI, Gianluca Attilio, Stuttgart (DE)
(74) Representative: Nokia EPO representatives

(57) **Abstract**

The present subject matter relates to a method for transmission of data by an apparatus in a communication channel of a first wireless network, the method comprising a first backoff based transmission operation comprising: determining a set of interfering apparatuses that are configured for accessing the communication channel to transmit data, the set of apparatuses comprising the apparatus; ranking the set of apparatuses by transmission priority resulting in an order; performing a channel access operation comprising: setting a backoff timer based on a current order of the apparatus and starting the backoff timer, thereby triggering the apparatus to transmit data, referred to as first transmission, when the backoff timer expires; sensing the communication channel for a second transmission by a second apparatus of the set of apparatuses; in case the second transmission occurs, halting the backoff timer while the second transmission occurs.

## Description

### Technical Field

Various example embodiments relate to telecommunication systems, and more particularly to an apparatus for transmission of data in a communication channel.

### Background

Access to a channel in unlicensed bands is regulated to ensure fairness, with Listen Before Talk (LBT) potentially being a mandatory requirement. Wi-Fi may utilize LBT-based channel access mechanisms but it may face significant challenges due to its traditional operation methods. These challenges result in performance degradation, particularly in congested environments with numerous devices. This congestion hinders the network's ability to meet demanding latency and reliability requirements, ultimately impacting overall network efficiency and data throughput.

### Summary

Example embodiments provide an apparatus (also referred to as first apparatus) for transmission of data in a communication channel of a first wireless network, the apparatus comprising at least one processor; and at least one memory storing instructions that, when executed by the at least one processor, cause the apparatus at least to perform a first backoff based transmission operation comprising: determining a set of interfering apparatuses that are configured for accessing the communication channel to transmit data, the set of apparatuses comprising the apparatus; ranking the set of apparatuses by transmission priority resulting in an order; and performing a channel access operation comprising: setting a backoff timer based on a current order of the apparatus and starting the backoff timer, thereby triggering the apparatus to transmit data, referred to as first transmission, when the backoff timer expires; sensing the communication channel for a second transmission by a second apparatus of the set of apparatuses; in case the second transmission occurs, halting the backoff timer while the second transmission occurs.

Example embodiments provide a method for transmission of data by an apparatus in a communication channel of a first wireless network, the method comprising a first backoff based transmission operation comprising: determining a set of interfering apparatuses that are configured for accessing the communication channel to transmit data, the set of apparatuses comprising the apparatus; ranking the set of apparatuses by transmission priority resulting in an order; performing a channel access operation comprising: setting a backoff timer based on a current order of the first apparatus and starting the backoff timer, thereby triggering the apparatus to transmit data, referred to as first transmission, when the backoff timer expires; sensing the communication channel for a second transmission by a second apparatus of the set of apparatuses; in case the second transmission occurs, halting the backoff timer while the second transmission occurs.

Example embodiments provide a computer program comprising instructions for causing an apparatus for performing at least the following: determining a set of interfering apparatuses that can transmit data on a communication channel, the set of apparatuses comprising the apparatus; ranking the set of apparatuses by transmission priority; performing a channel access operation comprising: setting a backoff timer based on a current order of the apparatus and starting the backoff timer, thereby triggering the apparatus to transmit data, referred to as first transmission, when the backoff timer expires; sensing the communication channel for a potential second transmission by a second apparatus of the set of apparatuses; halting the backoff timer during the second transmission if the second transmission occurs.

Example embodiments provide a non-transitory computer readable medium comprising program instructions that, when executed by an apparatus, cause the apparatus to perform at least the method.

### Brief Description of the Drawings

The accompanying figures are included to provide a further understanding of examples, and are incorporated in and constitute part of this specification. In the figures:
FIG.1 is a flowchart of a method for transmission of data in a communication channel of a first wireless network, in accordance with an example of the present subject matter;
FIG. 2 is a flowchart of a method for transmission of data in a communication channel of a first wireless network, in accordance with an example of the present subject matter;
FIG. 3 is a flowchart of a method for transmission of data in a communication channel of a first wireless network, in accordance with an example of the present subject matter;
FIG. 4 is a flowchart of a method for transmission of data in a communication channel of a first wireless network, in accordance with an example of the present subject matter;
FIG. 5 is a flowchart of a method for transmission of data in a communication channel of a first wireless network, in accordance with an example of the present subject matter;
FIG. 6A illustrates an example wireless communication system in which the present subject matter may be implemented in accordance with an example;
FIG. 6B shows an example implementation of a concurrent execution of the first backoff based transmission operation;
FIG. 6C illustrates the status of the access to the communication channel by two transmitters during a concurrent execution of the first backoff based transmission operation;
FIG. 7 illustrates the status of the access to a communication channel by three transmitters of a wireless communication system;
FIG. 8 illustrates the status of the access to a communication channel by three transmitters of a wireless communication system during a concurrent execution of the first backoff based transmission operation;
FIG. 9 illustrates the status of the access to the communication channel by two transmitters during a concurrent execution of the first backoff based transmission operation;
FIG. 10 is a block diagram showing an example of an apparatus according to an example of the present subject matter.

### Detailed Description

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may enable concurrent access to a communication channel while minimizing interference through a decentralized approach. This approach may eliminate the need for signaling between competing devices, which may streamline the communication process and reduce overhead.

An advantage of the present subject matter may be its ability to mitigate significant delays caused by the randomness in backoff values. Systems may often suffer from unpredictable delays as devices randomly choose backoff intervals to avoid collisions, but the present subject matter may optimize this process to ensure more consistent performance. Additionally, the present subject matter may address the issue of collisions resulting from simultaneous channel access attempts. By implementing a more intelligent and adaptive access mechanism, the system can significantly reduce the likelihood of collisions, thereby improving overall network efficiency.

Furthermore, the present subject matter may tackle the problem of starvation, which may occur when certain devices are physically positioned in a manner that delays their packet transmission. By dynamically adjusting access priorities and ensuring fair channel access, the present subject matter may ensure that all devices, regardless of their physical location, have a fair opportunity to transmit their data.

Overall, by addressing these critical issues-delays, collisions, and starvation-this decentralized approach may enhance both the efficiency and reliability of communication in decentralized networks.

"First," "Second," etc. as used herein, these terms are used as labels for nouns that they precede, and do not necessarily imply any type of ordering (e.g., spatial, temporal, logical) unless explicitly defined as such.

A first apparatus may be configured to access a communication channel of a first wireless network. This access may involve transmitting data using the communication channel. The communication channel may refer to a specific frequency range. Transmitting data using the communication channel may include encoding the data into signals that match a frequency of the frequency range. The first apparatus may, for example, be connected to the first wireless network.

A wireless network such as the first wireless network may refer to a network comprising one or more network nodes such as access points or the like which are capable of wireless radio communication with apparatuses connected to the wireless network. The first wireless network may be part of a wireless communication system. The first apparatus may be, for example, an access point of the first wireless network or a wireless device configured to be connected to the first wireless network. This wireless device may include a mobile station, subscriber station, remote terminal, wireless terminal, receive point, user device, smartphone, tablet, laptop, IoT device, or any other type of equipment capable of wireless communication within the wireless network.

However, the communication channel may not be exclusively accessible by the first apparatus, as other apparatuses may compete with it to use the same communication channel. Consequently, these apparatuses, including the first apparatus, may form a set of interfering apparatuses. The set of interfering apparatuses may be determined by the first apparatus. The set of interfering apparatuses may interfere because all its members may contend for the same communication channel, potentially causing collisions and signal interference. Such competition can lead to delays, reduced data throughput, and decreased overall network efficiency. However, the present subject matter may address and resolve this issue.

For simplification of the description, the set of interfering apparatuses may be referred to as the set of apparatuses. The first apparatus may be configured to rank the set of apparatuses by transmission priority. This may result in an order of the set of apparatuses. The order may indicate, for example, whether the first apparatus is ranked first, second, or any other position in a sequence where access priorities are captured. This is referred to as current order of the first apparatus. For example, each apparatus of the set of apparatuses may be assigned a transmission priority level in accordance with an alternation scheme. The alternation scheme may be performed based on at least one of: the time since the last transmission, the number of transmissions, or a rotational approach. This may allow for both fixed ranking in single processing scenarios and dynamic alternation during iterative processing. This approach may ensure that the transmission opportunities are balanced based on real-time usage, preventing any single device from dominating the communication channel and adapting to varying network conditions. This approach may allow for a better management of heterogeneous traffic, where certain traffic with strict delay requirements may be properly prioritized. The process of ranking may, for example, order the set of apparatuses from highest to lowest transmission priority level. Once ranked, the set of apparatuses may be placed in a sequence that may dictate their access to the communication channel.

After determining the set of apparatuses and ranking them, the first apparatus may be configured to perform a channel access operation. In one example, the channel access operation may be performed in response to determining by the first apparatus that the communication channel is idle or free. The communication channel is idle or free means that the communication channel is not currently being used for communication. That is, no data transmissions are taking place, and the communication channel is available for an apparatus that needs to send data.

The channel access operation may comprise setting a backoff timer based on the current order of the first apparatus and starting the backoff timer. This may trigger the first apparatus to perform a transmission of data when the backoff timer expires. This transmission of data when the backoff timer expires may be referred to as first transmission. For example, the first apparatus may automatically perform the first transmission in response to determining or detecting that the backoff timer has expired. For example, the backoff timer may be set to a specific duration which is determined using the current order of the first apparatus. The backoff timer expires if, for example, the backoff timer reaches zero. The backoff timer may be a timer. The timer may be a device component and/or a software component that measure and record the passage of time or control the duration of operations.

The channel access operation may further comprise sensing the communication channel for a (potential) second transmission by a second apparatus of the set of apparatuses. For example, the first apparatus may tune its receiver to the frequency of the communication channel and listen for any existing signals. The sensing may or may not detect a second transmission while the backoff timer is running.

The channel access operation may further comprise halting or freezing the backoff timer while the second transmission occurs. This is performed in case the sensing detects the second transmission. In case the second transmission is not detected, the backoff timer is not halted and continues to count down.

The first apparatus may thus be configured to perform a first backoff based transmission operation which comprises the determining of the set of apparatuses, the ranking of the set of apparatuses and the execution of the channel access operation. The first backoff based transmission operation may be an operation of method for data transmission. The term "backoff based" or just "backoff" may be used to indicate a mechanism to manage access to the communication channel and reduce the likelihood of collisions when multiple apparatuses attempt to transmit simultaneously. The first apparatus may be configured to automatically perform the first backoff based transmission operation in response to an initiating event. The initiating event may, for example, comprise: the connection of the first apparatus to the first wireless network, or a reception of a user triggering request.

According to one example, the channel access operation may further comprise: upon earliest termination of the first transmission or of the second transmission repeating the ranking of the set of apparatuses based on the earliest terminated transmission. For example, the alternation scheme used in the ranking may consider whether the first or second apparatus already transmitted during the last execution of the channel access operation. According to this example, the first apparatus may repeatedly perform the channel access operation. In each iteration, this example may result in a new order of the set of apparatuses, where the current order of the first apparatus may differ from its previous ranking in the last execution of the ranking.

The execution of the channel access operation may result either in the first transmission being first performed or result in the second transmission being first performed. In case the execution of the channel access operation results in the first transmission being first performed, the ranking of the set of apparatuses may be repeated upon termination of the first transmission. The (re)ranking may be based on the terminated first transmission. In case the execution of the channel access operation results in the second transmission being first performed, the ranking of the set of apparatuses may be repeated upon termination of the second transmission. The (re)ranking may be based on the terminated second transmission.

In one example, after completing the execution of the channel access operation, the first apparatus may sense the communication channel to determine if it is free. The completion of the execution of the channel access operation by the first apparatus may mean that the backoff timer has expired and respective transmission is performed. If the communication channel is sensed as free, the first apparatus may repeat the channel access operation. Alternatively, after completing the execution of the channel access operation, the first apparatus may automatically repeat the channel access operation.

The channel access operation may be repeatedly performed until a criterion is fulfilled. The criterion may require any one of: the first apparatus is disconnected from the first wireless network, or a maximum number of iterations is reached.

According to one example, the set of apparatuses comprises apparatuses of the first wireless network. The set of apparatuses may be part of the first wireless network. This may enable control over interference in intra-network transmissions.

According to one example, the set of apparatuses comprises apparatuses of the first wireless network and one or more apparatuses of one or more second wireless networks neighbouring to the first wireless network. The first and second wireless networks may be part of the wireless communication system. The neighbouring first and second wireless networks may be two or more wireless networks that operate in close physical proximity to each other. For example, the neighbouring wireless networks may typically be located in adjacent spaces, such as neighbouring apartments, offices, or public areas where multiple access points are deployed. These neighbouring networks may operate on overlapping frequency channels, such as the communication channel, leading to potential interference. This example may enable control over interference in both intra-network and inter-network transmissions.

According to one example, the first apparatus may be configured to perform the first backoff based transmission operation concurrently with an execution of the first backoff based transmission operation at at least one apparatus of the set of apparatuses. That is, the first backoff based transmission operation may be concurrently executed on two or more apparatuses, wherein the two or more apparatuses may be referred to as concurrent set of apparatuses. The concurrent set of apparatuses includes the first apparatus. According to this example, the concurrent set of apparatuses may be a subset of the set of apparatuses or the entire set of apparatuses. For example, each apparatus of the concurrent set of apparatuses may be configured to automatically execute the first backoff based transmission operation in response to the initiating event. This example may enable the seamless integration of the present subject matter into existing systems, such as by enabling other interfering apparatuses to utilize alternative backoff techniques.

According to one example, the first apparatus may be configured to perform the ranking in accordance with a scheduling policy and compute a duration of the backoff timer in accordance with a function. The function may be referred to as backoff (BO) computation function. The scheduling policy may, for example, be based on the alternation scheme or other criteria. The scheduling policy and the BO computation function are shared among the set of apparatuses for enabling a concurrent execution of the first backoff based transmission operation at each further apparatus of the set of apparatuses. That is, the same scheduling policy and the BO computation function is used by the concurrent set of apparatuses to perform the first backoff based transmission operation. The scheduling policy and the BO computation function may, for example, be used as configuration parameters of the first backoff based transmission operation. This may allow for reconfiguring the first backoff based transmission operation e.g., dynamically during the concurrent execution of the first backoff based transmission operation. The reconfiguration may comprise the adjustment of the scheduling policy and/or the BO computation function. The adjusted scheduling policy and/or adjusted BO computation function may be shared again between the concurrent set of apparatuses. In this example, the concurrent set of apparatuses may be the set of apparatuses.

According to one example, the first apparatus may be configured to perform the ranking in accordance with a scheduling policy and compute the duration of the backoff time in accordance with a function. The function may be referred to as BO computation function. The scheduling policy and the BO computation function are shared among a subset of apparatuses of the set of apparatuses for enabling a concurrent execution of the first backoff based transmission operation at each further apparatus of the subset of apparatuses. In this example, the concurrent set of apparatuses may be the subset of apparatuses.

According to one example, the set of apparatuses comprises one or more apparatuses of the first wireless network and the one or more apparatuses of the one or more second wireless networks neighbouring the first wireless network. The first apparatus may be configured to perform at least one of the following: the ranking (e.g., according to the scheduling policy or the alternation scheme) such that the highest ordered apparatus is alternated between different wireless networks, or the ranking such that the highest ordered apparatus of each wireless network is alternated between apparatuses of the wireless network.

This example may aim to distribute the highest priority status both across different networks and within each network, leading to more balanced and efficient network usage. This example may enable inter-network alternation and intra-network alternation. With the inter-network alternation, the apparatus with the highest priority alternates between different wireless networks. This may ensure that no single network consistently gets the highest priority apparatus, promoting fairness and balanced load distribution across multiple wireless networks. With the intra-network alternation, within each individual wireless network, the apparatus with the highest priority is also alternated among the apparatuses within that network. This may ensure that no single apparatus within a network consistently holds the highest priority, again promoting fairness and preventing any one device from monopolizing the network's resources.

To simplify this example, consider two wireless networks, Network A and Network B, each with three devices (A1, A2, A3, and B1, B2, B3). Initially, in the first round, A1 is the highest ordered apparatus because it's Network A's turn. Inter-network alternation ensures that in the second round, the highest priority switches to Network B, prioritizing e.g., B1. Intra-network alternation ensures that within each network, the highest priority apparatus changes, so in the third round when it's Network A's turn again, A2 or A3 will take the highest priority. Similarly, in the fourth round, B2 or B3 will be prioritized in Network B, continuing this pattern. The term "round" refers to an execution instance of the channel access operation. This execution instance may also be referred to as transmission phase.

According to one example, the first apparatus may be configured to compute a duration of the backoff timer using at least one of the following: the number of the set of apparatuses, the current order of the first apparatus or a contention window. The computation of the duration of the backoff timer may be part of the step of setting the backoff timer. The duration of the backoff timer may also be referred to as backoff time. For example, the first ranked apparatus may be assigned the lowest backoff time. The contention window may define a range of time slots within which the first apparatus may randomly select a time window. This time window in combination of the current order of the first apparatus and the number of the set of apparatuses may be used to compute the duration of the backoff timer. This may introduce randomness in the computation of the duration of the backoff timer. Indeed, choosing a randomized time window may reduce the likelihood of collisions, ensure that all devices have a fair chance to access the communication channel by randomly assigning backoff times.

The contention window size may, for example, be dynamically adjusted based on network conditions. This may result in the adjustment of the BO computation function. For example, if the first transmission is successful, the contention window size may be reset to a minimum value. However, if the first transmission is unsuccessful, the window size may increase, thereby reducing the probability of further collisions. The dynamic adjustment of the contention window size may help the network adapt to varying traffic loads and congestion levels.

According to one example, the first apparatus may be configured to stop the performing of the first backoff based transmission operation, in response to the halting being performed a number of times smaller than a threshold, during a predefined time period. The time period may, for example, be the last n minutes starting from the moment the number of halts is checked. If the number of halts is smaller than the threshold, it may indicate a lack of inter-apparatus activity. This inactivity can be detected by observing that the backoff timer of the first apparatus has not been interrupted by any participating apparatus for at least Nmax consecutive times, where Nmax may be the number of executions of the channel access operation.

According to one example, the first apparatus may be configured to: in response to the number of times the halting associated with a second apparatus being smaller than a threshold, remove the second apparatus from the set of apparatuses, and in response to the number of the set of apparatuses being smaller than a threshold, stop the performing of the first backoff based transmission operation. This example may, for example, be executed after each execution of the channel access operation or after each M executions of the channel access operation, where M is an integer higher than or equal to two.

For example, the first apparatus may be configured to determine the number (Ns) of times each second apparatus of the set of apparatuses has caused the halting of the backoff timer. If this number Ns is smaller than a threshold for a specific second apparatus, meaning that the second apparatus does not provide a potential interfering to the first apparatus, this specific second apparatus may be removed from the set of apparatuses. In addition, the first apparatus may be configured to check whether the (remaining) number of the set of apparatuses is smaller than a threshold (e.g., 3), and in case this number of the set of apparatuses is smaller than the threshold, the first apparatus may stop performing the first backoff based transmission operation.

According to one example, the first apparatus may be configured to stop the performing of the first backoff based transmission operation in case the number of the set of apparatuses is smaller than a threshold. This may function as an activation/deactivation mechanism for the first backoff based transmission operation. This example may save processing resources that would otherwise be required by an unnecessary execution of the channel access operation.

According to one example, the first apparatus may be configured to perform, after the stopping of the first backoff based transmission operation, a default backoff transmission operation for transmitting data on the communication channel. The default backoff transmission operation may be a second backoff based transmission operation that may be executed after stopping execution of the first backoff based transmission operation.

The present subject matter may seamlessly be integrated in existing wireless communication systems such as Wi-Fi systems. The wireless communication system according to the present subject matter may be a Wi-Fi system, but it is not limited to Wi-Fi alone. It can also be adapted for use in other wireless communication systems, such as cellular networks, and any other protocols that involve managing access to a shared communication channel.

According to one example, the first wireless network is a basic service set (BSS), wherein the set of apparatuses comprises at least one access point and/or at least one station of interfering BSSs. The first apparatus may be an access point or a station of the BSS.

According to one example, the determining of the set of apparatuses is performed by sensing inter-BSS transmissions to identify a presence of overlapping BSSs that are used to form the set of apparatuses. For example, this sensing may be performed by inspecting the headers of the detected inter-BSS frames. The set of apparatuses may comprise the first apparatus and apparatuses which are part of the overlapping BSSs.

According to one example, a Physical Layer Convergence Protocol, PLCP, header in data communication between the BSSs includes a field which indicates a scheduling policy to perform the ranking. This may provide an efficient mechanism making use of existing infrastructure to share the scheduling policy between the set of apparatuses.

According to one example, the ranking of the set of apparatuses is performed using the BSS colours of the BSSs.

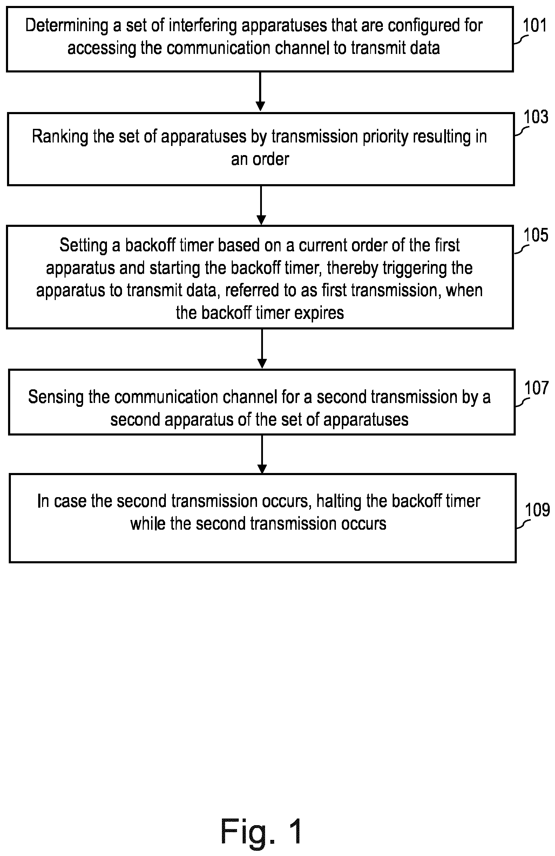

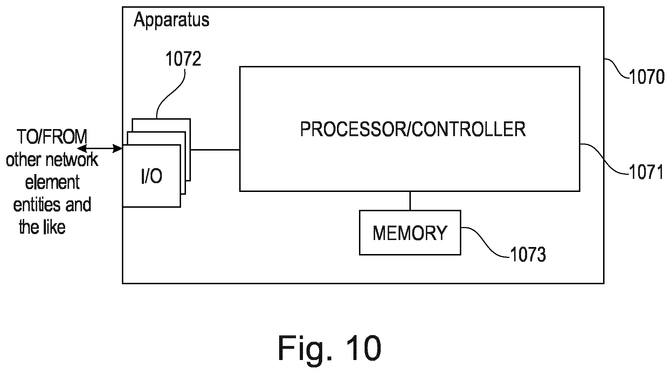

**FIG. 1** is a flowchart of a method for transmission of data in a communication channel of a first wireless network, in accordance with an example of the present subject matter. The method of FIG. 1 may, for example, be performed by a first apparatus such as the apparatus of FIG. 10.

A set of interfering apparatuses (set of apparatuses) that are configured for accessing the communication channel to transmit data may be determined in step 101. The set of apparatuses comprises the first apparatus.

The set of apparatuses may be ranked in step 103 by transmission priority resulting in an order.

In step 105, a backoff timer may be set based on a current order of the first apparatus and the backoff timer may be started. This may trigger the first apparatus to transmit data, referred to as first transmission, when the backoff timer expires.

The communication channel may be sensed in step 107 for a second transmission by a second apparatus of the set of apparatuses.

In case the second transmission occurs, the backoff timer may be halted in step 109 while the second transmission occurs.

Steps 105 through 109 may exemplify the channel access operation. Steps 101 through 109 may exemplify the first backoff based transmission operation.

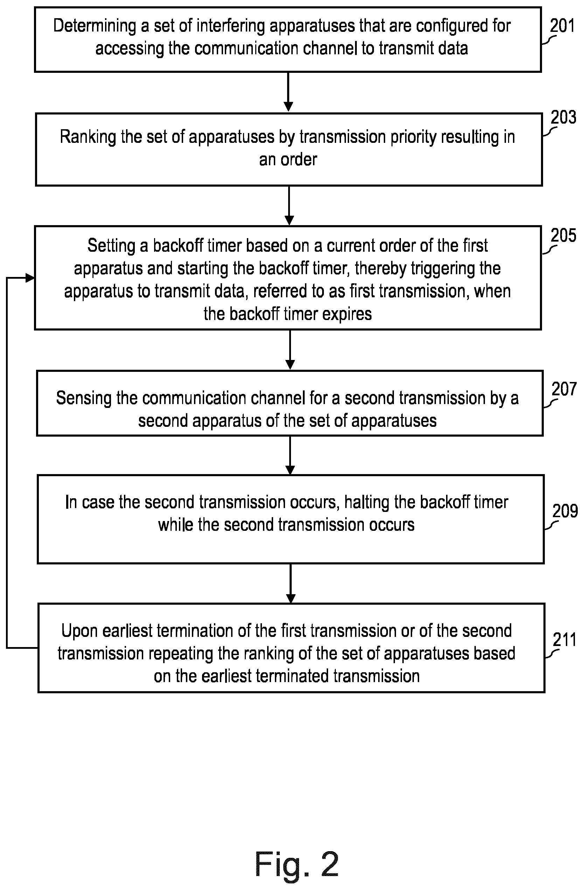

**FIG. 2** is a flowchart of a method for transmission of data in a communication channel of a first wireless network, in accordance with an example of the present subject matter. The method of FIG. 2 may, for example, be performed by a first apparatus such as the apparatus of FIG. 10.

A set of interfering apparatuses that are configured for accessing the communication channel to transmit data may be determined in step 201. The set of apparatuses comprises the first apparatus.

The set of apparatuses may be ranked in step 203 by transmission priority resulting in an order.

In step 205, a backoff timer may be set based on a current order of the first apparatus and the backoff timer may be started. This may trigger the first apparatus to transmit data, referred to as first transmission, when the backoff timer expires.

The communication channel may be sensed in step 207 for a second transmission by a second apparatus of the set of apparatuses.

In case the second transmission occurs, the backoff timer may be halted in step 209 while the second transmission occurs.

Upon earliest termination of the first transmission or of the second transmission the ranking of the set of apparatuses may be repeated in step 211 based on the earliest terminated transmission.

As indicated in FIG. 2, steps 205 through 211 may repeatedly be performed. Steps 205 through 211 may exemplify the channel access operation. Steps 201, 203 and the repeated execution of steps 205 to 211 may exemplify the first backoff based transmission operation.

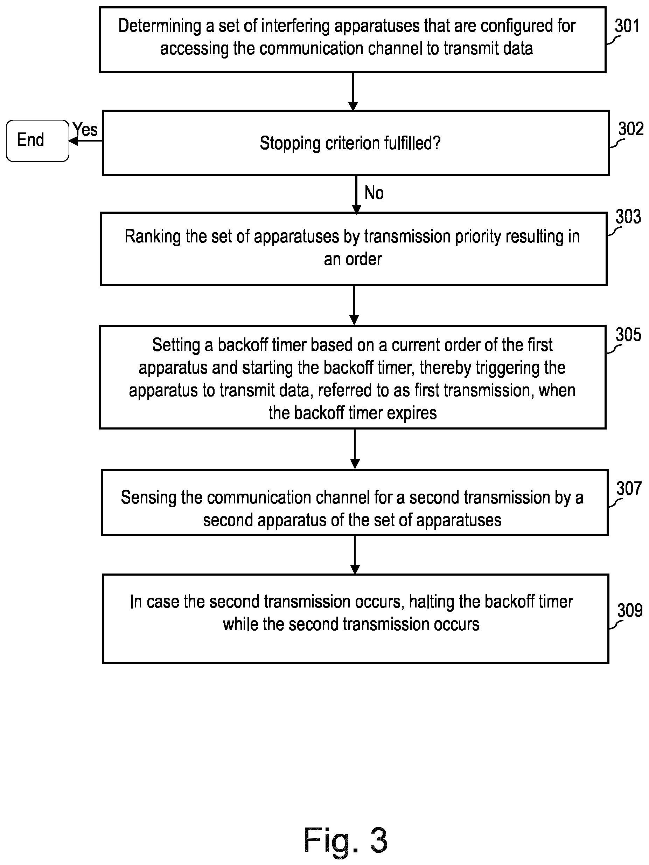

**FIG. 3** is a flowchart of a method for transmission of data in a communication channel of a first wireless network, in accordance with an example of the present subject matter. The method of FIG. 3 may, for example, be performed by a first apparatus such as the apparatus of FIG. 10.

A set of interfering apparatuses that are configured for accessing the communication channel to transmit data may be determined in step 301. The set of apparatuses comprises the first apparatus.

In case (step 302) a stopping criterion is fulfilled the method may end. Otherwise, steps 303 to 309 may be performed. The stopping criterion may require that the number of set of apparatuses is smaller than a threshold.

The set of apparatuses may be ranked in step 303 by transmission priority resulting in an order.

In step 305, a backoff timer may be set based on a current order of the first apparatus and the backoff timer may be started. This may trigger the first apparatus to transmit data, referred to as first transmission, when the backoff timer expires.

The communication channel may be sensed in step 307 for a second transmission by a second apparatus of the set of apparatuses.

In case the second transmission occurs, the backoff timer may be halted in step 309 while the second transmission occurs.

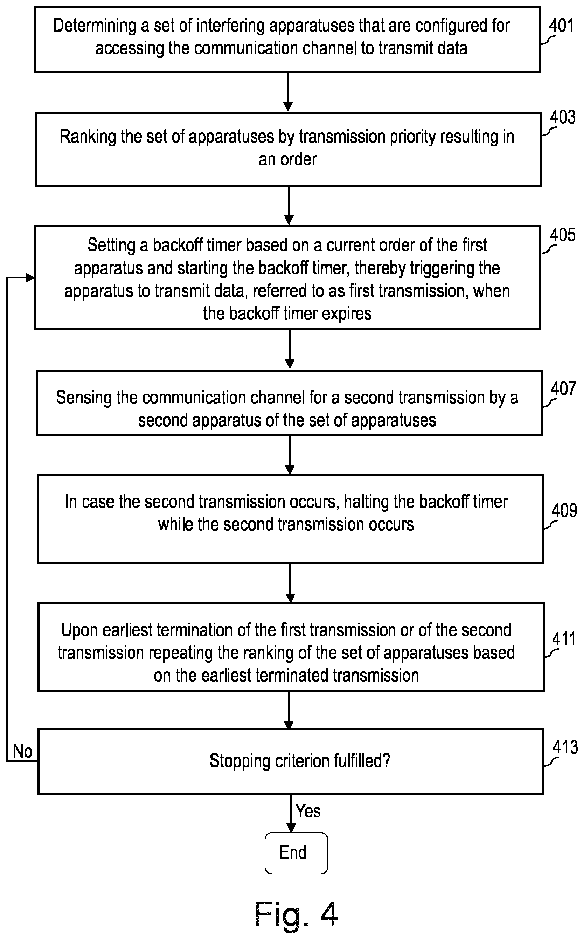

**FIG. 4** is a flowchart of a method for transmission of data in a communication channel of a first wireless network, in accordance with an example of the present subject matter. The method of FIG. 4 may, for example, be performed by a first apparatus such as the apparatus of FIG. 10.

A set of interfering apparatuses that are configured for accessing the communication channel to transmit data may be determined in step 401. The set of apparatuses comprises the first apparatus.

The set of apparatuses may be ranked in step 403 by transmission priority resulting in an order.

In step 405, a backoff timer may be set based on a current order of the first apparatus and the backoff timer may be started. This may trigger the first apparatus to transmit data, referred to as first transmission, when the backoff timer expires.

The communication channel may be sensed in step 407 for a second transmission by a second apparatus of the set of apparatuses.

In case the second transmission occurs, the backoff timer may be halted in step 409 while the second transmission occurs.

Upon earliest termination of the first transmission or of the second transmission the ranking of the set of apparatuses may be repeated in step 411 based on the earliest terminated transmission.

If a stopping criterion is met (step 413), the method may end. Otherwise, the method returns to step 405. The stopping criterion may require that the number of set of apparatuses is smaller than a threshold or that during a predefined time period, the halting (in step 409) being performed a number of times smaller than a threshold.

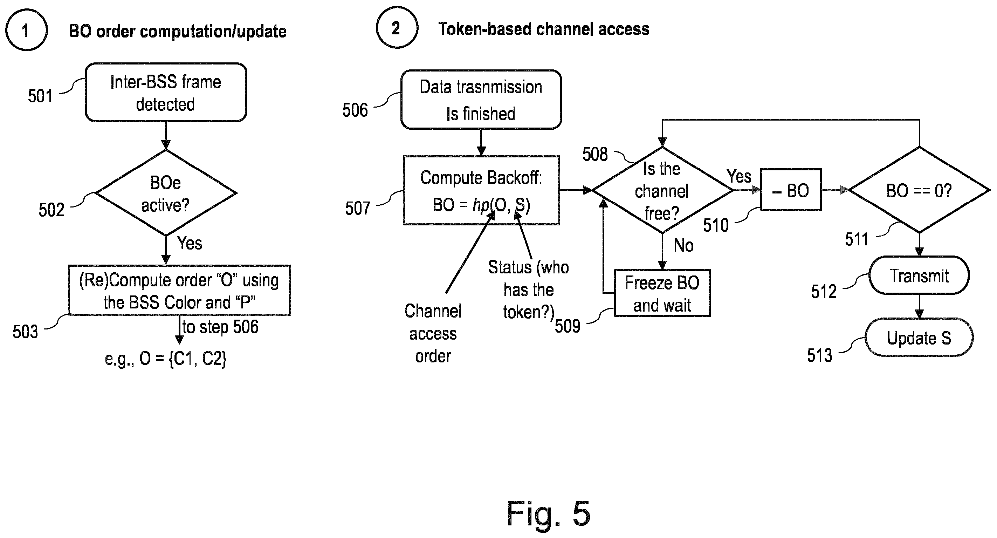

**FIG. 5** is a flowchart of a method for transmission of data in a communication channel of a first wireless network, in accordance with an example of the present subject matter. The method depicted in FIG. 5 may serve as an example implementation of the first backoff based transmission operation in a Wi-Fi system, where the first wireless network may be a BSS. The method of FIG. 5 may be performed by a first apparatus such as an access point or a station of the BSS.

As indicated in FIG. 5, steps 501 through 503 may be steps of a backoff (BO) computation operation.

The first apparatus may listen in step 501 to inter-BSS transmissions to identify the presence of overlapping BSSs. For example, the first apparatus may detect one or more inter-BSS frames indicating that two BSSs are overlapping: the BSS to which the first apparatus belongs and a neighbouring BSS.

It may be determined in step 502 whether the BO processing according to the present method is active. For example, based on the number of detected overlapping BSSs, the BO processing may be activated or deactivated. This branching condition may thus allow for the activation or deactivation of the present method as needed, enabling its use during specific situations, such as when the network load is high. In case the BO processing is active, step 503 may be performed.

By inspecting the headers of the detected inter-BSS frames, the first apparatus may compute or update in step 503 an ordered list ("O") of apparatuses of the overlapping BSSs. The computation of the list may use the BSS colour of the different involved BSSs and an optional field "P" that relates to the scheduling policy adopted (e.g., Round-Robin). The ordered list of apparatuses "O" may be an example implementation of the set of apparatuses as described herein.

The ordered list of the apparatuses may be used to define a virtual token and the holder of that token. The status of the token "S" may refer the holder of the token. For example, the first ordered apparatus in the list may be holder of the token. The ordered list as well as the token may be used to perform a token-based channel access operation comprising steps 506 through 513. The token-based channel access operation may provide an example implementation of the channel access operation. In one example, the ordered list used by the token-based channel access operation may be generated by the BO computation operation, as illustrated in FIG. 5, where the output of step 503 leads to step 506 of the token-based channel access operation. Alternatively, the ordered list may be determined within the token-based channel access operation itself, such as in step 507. Therefore, the execution of the BO computation operation may be optional in the method described in FIG. 5.

In step 506, the first apparatus may determine that its data transmission is finished. The first apparatus may use the status of the token "S" and the ordered list of apparatuses "O" to compute in step 507 the backoff time. Thus, the first apparatus may compute a new BO value, which may be triggered by the fact that the first apparatus has already finalized a transmission and may need to continue transmitting data. More specifically, a BO computation function *h_{P}*(,) may be used to compute the backoff time. Such a function may be selected according to the adopted scheduling policy "P", which in its most basic form may account for a Round Robin type of ordering. A function *f_{P}*() may be used to compute the list "O". The function *f_{P}*() may depend on the adopted scheduling policy "P" and take as input the BSS colour (*Cᵢ*) of all the involved BSSs (from 1 to N): *O* = *f_{P}*({*Cᵢ*}_{1,...,*N*}).

As a way of example, function *f_{P}*() may lead to order *O* = {BSS2, BSS1, BSS3} for 3 BSSs using colors 0010, 0001, and 0011, respectively, for a Round Robin policy with ascending order.

In one example, the method of FIG. 5 may, optionally, use the Arbitration Inter-Frame Space (AIFS) time feature. For simplification of the drawings, it is not represented.

The first apparatus may determine in step 508 whether the communication channel is free. If the communication channel is not free, the first apparatus may freeze or halt the BO timer in step 509 and wait until the communication channel is free again. That is, the step 508 is repeatedly performed. If the communication channel is free, the BO timer may be controlled by the first apparatus to count down in step 510. The first apparatus may check in step 511 whether the BO timer has expired. If the BO timer is not expired, the method returns to step 508. If the BO timer expires, the first apparatus may transmit data in step 512 and update the status of the token in step 513.

Thus, the method of FIG. 5 may address the issues associated with uncoordinated backoff, using a token-based backoff method whereby apparatuses access the channel in an ordered but distributed manner (thus being compliant with the current IEEE 802.11 Distributed Coordination Function (DCF)).

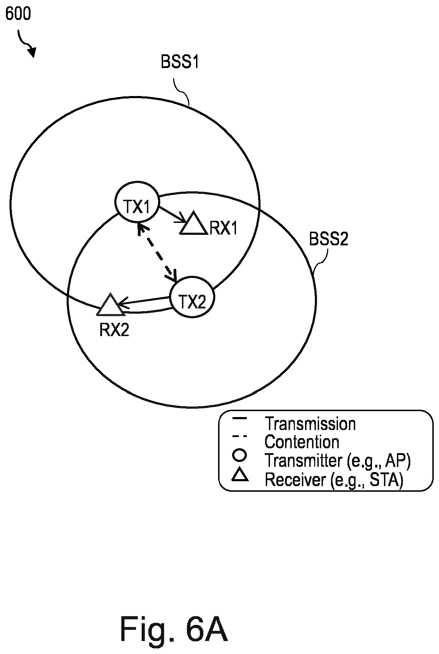

**FIG. 6A** illustrates an example wireless communication system in which the present subject matter may be implemented in accordance with an example. The wireless communication system 600 is a Wi-Fi system comprising two neighboring BSSs, BSS1 and BSS2. BSS1 includes an access point and a station, while BSS2 similarly comprises an access point and a station. As shown in FIG. 6A, in BSS1, the access point and the station communicate through a communication channel, with one acting as transmitter TX1 and the other as receiver RX1. In BSS2, the access point and the station also communicate through the communication channel, where one functions as transmitter TX2 and the other as receiver RX2. However, as the two transmitters TX1 and TX2 have access to the same communication channel this can lead to contention.

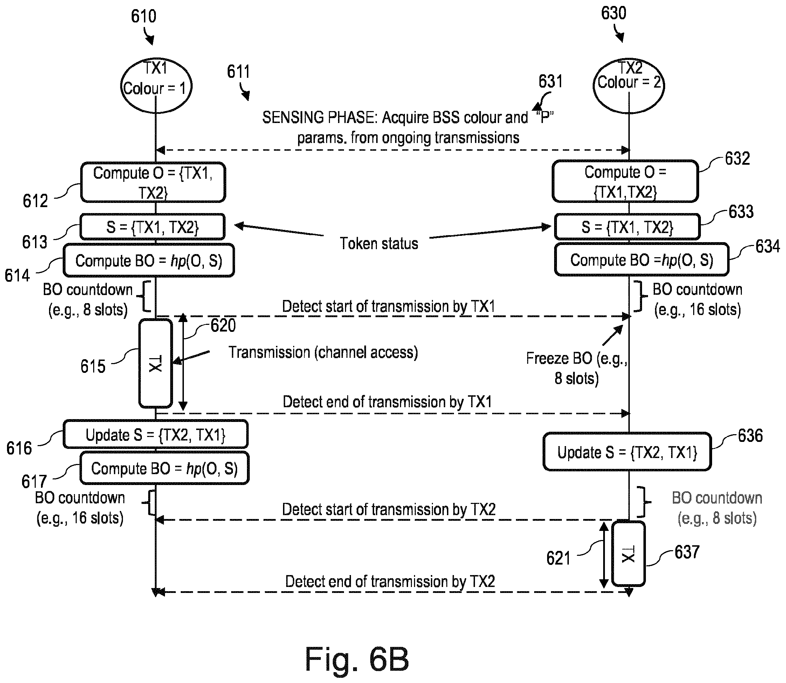

To address this issue, the transmitters TX1 and TX2 may be configured to execute concurrently the first backoff based transmission operation. This is illustrated in FIG. 6B, which shows an example implementation of the concurrent execution of the first backoff based transmission operation. The transmitters TX1 and TX2 are associated with timelines 610 and 630, respectively, indicating the flow of the execution of the first backoff based transmission operation at the transmitters.

In step 611, The transmitter TX1 may collect information in order to determine a set of apparatuses. This may be achieved, for example, by gathering information from the environment to derive an ordered list for channel access, which constitutes the set of apparatuses. The transmitter TX1 may retrieve information from ongoing inter-BSS transmissions to become aware of the potential neighboring devices to which the ordered channel access applies. More specifically, the transmitter TX1 may retrieve a parameter such as the BSS colour from inter-BSS transmissions. The BSS colour may be provided in a field in PLCP headers of Wi-Fi frames. In addition, to the BSS colour, the present subject matter may include another parameter in an additional optional field "P" in the PLCP headers, which indicates a particular scheduling policy to be applied. If field "P" is not indicated, a default ordering is assumed to follow, for example, a Round-Robin scheme.

Similarly, in step 631, the transmitter TX2 may collect information in order determine a set of apparatuses. This may be achieved, for example, by gathering information from the environment to derive an ordered list for channel access, which constitutes the set of apparatuses. The transmitter TX2 may retrieve information from ongoing inter-BSS transmissions to become aware of the potential neighboring devices to which the ordered channel access applies. More specifically, the transmitter TX2 may retrieve the BSS colour from inter-BSS transmissions. The BSS colour may be a field that is already included in PLCP headers in Wi-Fi frames. In addition, to the BSS colour, the present subject matter may include an optional field "P" in the PLCP headers, which indicates a particular scheduling policy to be applied. If field "P" is not indicated, a default ordering is assumed to follow, for example, a Round-Robin scheme.

In step 612, the transmitter TX1 may use the collected information in order to determine and rank the set of apparatuses. For example, using the parameters obtained in step 611, the transmitter TX1 may derive an ordered list "O", which is to be used for accessing the communication channel. This list may be calculated in a distributed manner, so no communication is required. Likewise, the computation of the list "O" is expected to be equally derived for devices (e.g., TX1 and TX2 in this example) that sense to each other. This is the case with the list obtained by transmitters TX1 and TX2. The function *f_{P}*() may be used to compute the list "O".

In step 632, the transmitter TX2 may use the collected information in order to determine and rank the set of apparatuses. For example, using the parameters obtained in step 631, the transmitter TX2 may derive an ordered list "O", which is to be used for accessing the communication channel. This list may be calculated in a distributed manner, so no communication is required. Likewise, the computation of the list "O" is expected to be equally derived for devices (e.g., TX1 and TX2 in this example) that sense to each other. This is the case with the list obtained by transmitters TX1 and TX2. The function *f_{P}*() may be used to compute the list "O".

The ordered list "O" ranks transmitter TX1 first, followed by transmitter TX2, indicating that TX1 has the highest transmission priority. After determining the list, both transmitters TX1 and TX2 have access to the same token statuses 613 and 633 respectively. In this example, the token is held by transmitter TX1 due to its highest position in the ordered list "O".

The list "O" as well as the status of the token determined in steps 612-613 may be used by the transmitter TX1 to compute in step 614 the backoff time. The backoff time may be expressed in time slots. For example, the computed backoff time may be 8 slots. Similarly, the list "O" as well as the status of the token determined in steps 632-633 may be used by the transmitter TX2 to compute in step 634 the backoff time. The backoff time may be expressed in time slots. For example, the computed backoff time may be 16 slots. The computation of the backoff time may use the same BO computation function (*h_{P}*(*O*,*S*)) at the transmitters TX1 and TX2. Since the token is with the transmitter TX1, the respective backoff time is shorter than the backoff time of the transmitter TX2.

After computing the backoff time, the backoff timer begins counting down in each of the respective transmitters, TX1 and TX2. During this countdown, both transmitters sense the communication channel for a second transmission by the other transmitter (TX2 and TX1, respectively). The transmitter with the smallest backoff time reaches zero first and initiates its transmission. This is illustrated in FIG. 6B, where transmitter TX1, having the smaller backoff time, starts its transmission 615 after expiration of its backoff timer. Since transmitter TX2 is sensing the communication channel, it detects transmission 615, including both its start and end. During the duration of transmission 615 (time 620), the backoff timer of transmitter TX2 is frozen (i.e., halted). This means that the backoff timer of transmitter TX2 is halted while transmission 615 is in progress (or while transmission 615 occurs).

After completing the transmission 615, the transmitter TX1 may rank again in step 616 the list of apparatuses "O" using the function *f_{P}*()*.* This may result in a new status of the token. In this case, the token is held by the transmitter TX2. The transmitter TX1 may recompute in step 617 the backoff time using the BO computation function *h_{P}*(*O*,*S*) based on the new status of the token. For example, the computed backoff time may be 16 slots.

For the default Round-Robin type of access, an apparatus i implementing the first backoff based transmission operation computes a random backoff value as follows: *BOᵢ = h_{P}*(*O,S*) = *R*~[*CWₘᵢₙ*(*S*), *CWₘₐₓ*(*S*)], where *CWₘᵢₙ* = (*M -* 1 - *dᵢ*) _{*} *CW* and *CWₘₐₓ* = (*M* - *dᵢ*) _{*} *CW*. *M* is the size of *O* (i.e., number of apparatuses in the list), *dᵢ* is the distance of apparatus i to the token (given by the current status *S*), and *CW* is the contention window (CW) value. The distance *dᵢ* of apparatus *i* to the token may represent its order in the list "O".

After detecting the end of the transmission 615, the transmitter TX2 may rank again in step 636 the list of apparatuses "O" using the function *f_{P}*(). This may result in a new status of the token. In this case, the token is held by the transmitter TX2. As indicated in FIG. 6B, after the transmission 615 ends, the backoff timer of the transmitter TX2 is unfrozen and continues countdown. The transmitter TX2 starts its transmission 637 after expiration of its backoff timer.

Since transmitter TX1 is sensing the communication channel, it detects transmission 637, including both its start and end. During the duration of transmission 637 (time 621), the backoff timer of transmitter TX1 is frozen. This means that the backoff timer of transmitter TX1 is halted while transmission 637 is in progress.

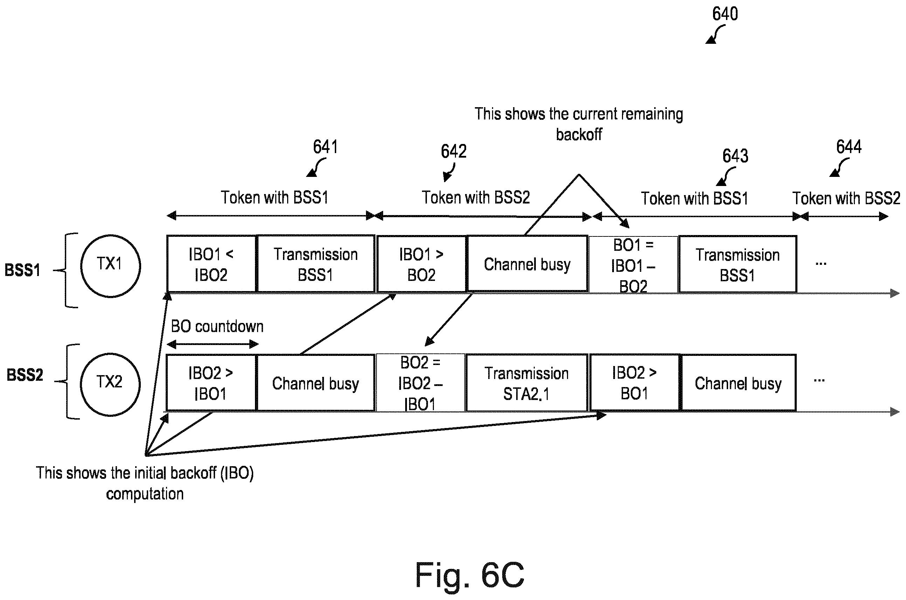

This example implementation of the concurrent execution of the first backoff based transmission operation may result in a channel access status 640 of the communication channel, as shown in FIG. 6C. FIG. 6C illustrates the status of the access to the communication channel by the transmitters TX1 and TX2 during the concurrent execution of the first backoff based transmission operation. FIG. 6C illustrates different transmission phases 641 through 644, with phase 641 being the initial transmission phase. During each phase, a backoff processing is performed to a) provide a rank of the set of apparatuses b) determine the backoff time for each transmitter based on the rank c) start the backoff timers of the transmitters based on the determined backoff times so that in d) one of the transmitters whose backoff timer expires first may transmit data on the communication channel. The backoff processing may be an example implementation of the channel access operation. Thus, in each transmission phase, the ranking of the list of apparatuses may be an updated ranking to enable alternation of the token between transmitters TX1 and TX2.

In the first transmission phase 641, the initially computed backoff times in steps 613 and 634 are backoff time IBO1 for transmitter TX1 and backoff time IBO2 for transmitter TX2. In each subsequent phase, the backoff time for the transmitter that transmitted data in the preceding phase is updated, while the remaining backoff time from the previous phase is determined as being the backoff time for the other transmitter.

For example, in the first transmission phase 641, the initially computed backoff times in steps 613 and 634 are backoff time IBO1 for transmitter TX1 and backoff time IBO2 for transmitter TX2. Since the token is with transmitter TX1, the backoff time IBO1 of TX1 is shorter than the backoff time IBO2 of TX2. Transmitter TX1, with the shorter backoff time IBO1, reaches zero first and initiates its transmission. When TX1 begins its transmission, the backoff timer of TX2 is halted with a remaining backoff time of BO2.

After TX1 completes its transmission, the second transmission phase 642 begins. In this phase, the backoff time of TX1 is updated to be longer than the remaining backoff time BO2 of TX2, and the token is passed to TX2. Since TX2 now has the shorter backoff time BO2, it reaches zero first and initiates its transmission. After TX2 completes its transmission, the third transmission phase 643 begins, and the backoff processing is repeated for each subsequent phase as described above.

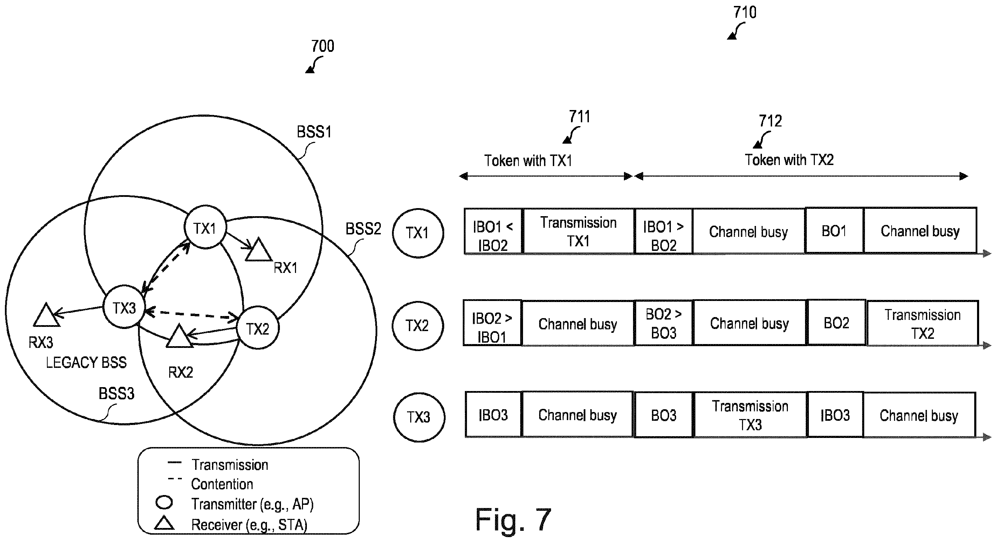

**FIG. 7** illustrates the status of the access to a communication channel by three transmitters TX1, TX2 and TX3 of a wireless communication system 700. The wireless communication system 700 is a Wi-Fi system comprising three neighboring BSSs, BSS1, BSS2 and BSS3. Each of the BSSs includes an access point and a station. As shown in FIG. 7, in BSS1, the access point and the station communicate through a communication channel, with one acting as transmitter TX1 and the other as receiver RX1. In BSS2, the access point and the station communicate through the communication channel, where one functions as transmitter TX2 and the other as receiver RX2. In BSS3, the access point and the station communicate through the communication channel, where one functions as transmitter TX3 and the other as receiver RX3. However, as the three transmitters TX1, TX2 and TX3 have access to the same communication channel this can lead to contention. To resolve this issue, the first backoff based transmission operation may be concurrently executed by a subset of the transmitters, such as transmitters TX1 and TX2, while transmitter TX3 executes a default backoff transmission operation (e.g., a legacy operation).

This example implementation of the concurrent execution of the first backoff based transmission operation may result in a channel access status 710 of the communication channel, as shown in FIG. 7.

FIG. 7 illustrates different transmission phases 711 through 712, with phase 711 being the initial transmission phase. As described with reference to FIG. 6C, in each transmission phase, the backoff processing may be performed for the transmitters TX1 and TX2. This mechanism is backwards-compatible with legacy operation. As shown in FIG. 7, the presence of a legacy transmitter (TX3) may not affect the token-based channel access scheme (and vice versa). In this case, TX1 detects that the token is with TX2 for a longer time due to the transmission held by the legacy device TX3. In any case, the ordered type of access for TX1 and TX2 is respected. When it comes to legacy operation, it may not be disrupted by the transmitters TX1 and TX2, provided that the latter act following the same channel access rules.

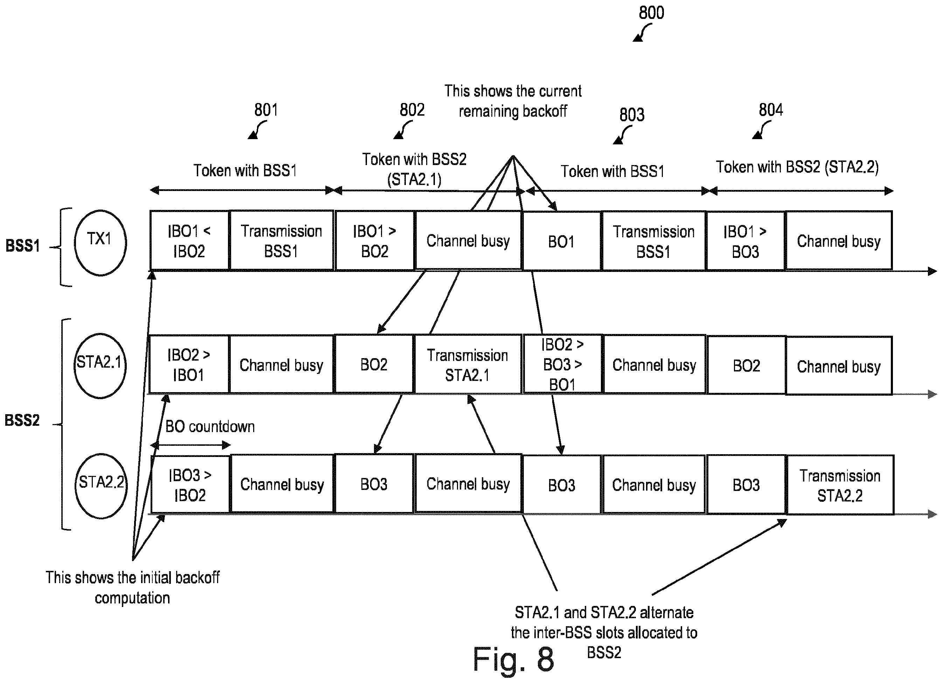

**FIG. 8** illustrates the status 800 of the access to a communication channel by three transmitters TX1, STA1 and STA2 of a wireless communication system. The wireless communication system is a Wi-Fi system comprising two neighboring BSSs, BSS1 and BSS2. BSS1 includes an access point and a station while BSS2 includes an access point and two stations STA2.1 and STA2.2. In BSS1, the access point and the station communicate through a communication channel, with one acting as transmitter TX1 and the other as receiver RX1. In BSS2, the access point and each of the stations communicate through the communication channel, where the station functions as transmitter and the access point as receiver. However, as the three transmitters TX1, STA2.1 and STA2.2 have access to the same communication channel this can lead to contention. To resolve this issue, the first backoff based transmission operation may be concurrently executed by the three transmitters.

FIG. 8 illustrates different transmission phases 801 through 804, with phase 801 being the initial transmission phase. During each phase, a backoff processing is performed to a) provide a rank of the set of apparatuses b) determine the backoff time for each transmitter based on the ranking c) start the backoff timers of the transmitters based on the determined backoff times so that in d) one of the transmitters whose backoff timer expires first may transmit data on the communication channel. Thus, in each transmission phase, the ranking of the list of apparatuses may be updated to alternate the token between the three transmitters. The ranking of the list of apparatuses differentiates this example from the example in FIG. 6C. Indeed, here the ranking is performed such that the highest ordered apparatus is alternated between different BSSs, and that the highest ordered apparatus of each BSS is alternated between apparatuses of the BSS. This is indicated in FIG. 8, where the ranking is performed so that each transmission phase is assigned to a BSS that is different from the BSS assigned to the previous transmission phase and the subsequent transmission phase. A transmission phase is assigned to a BSS may mean that the ranking in the transmission phase may result in one apparatus of that BSS. This is indicated in FIG. 8, where phase 801 has TX1 of BSS1 as the highest ordered apparatus, phase 802 has STA2.1 of BSS2 as the highest ordered apparatus, phase 3 has again TX1 of BSS1 as the highest ordered apparatus and so forth. In addition, the ranking is performed such that two consecutive phases that are assigned to the same BSS, have different highest ordered apparatus from that BSS. This is indicated in FIG. 8, where two consecutive phases 802 and 804 are assigned to the same BSS2, but in phase 802, the apparatus STA2.1 was first ranked while in phase 804 the apparatus STA2.2 was first ranked.

Hence, when computing the BO time, apparatuses may take into account whether contenders are within the same BSS or not. This may enable to alternate first between overlapping BSSs and then (within a given BSS token) do it among STAs. For that, the computation of the backoff time is scaled among BSSs to account first inter-BSS transmissions and second intra-BSS transmissions. In one example, the scaling of the BO computation may be determined or configured by the AP and communicated to the STAs during their association with the AP to connect to the BSS. The reception of the scaling information by the STAs may, for example, be part of an initial process of gathering data that may be used for implementing the first backoff based transmission operation.

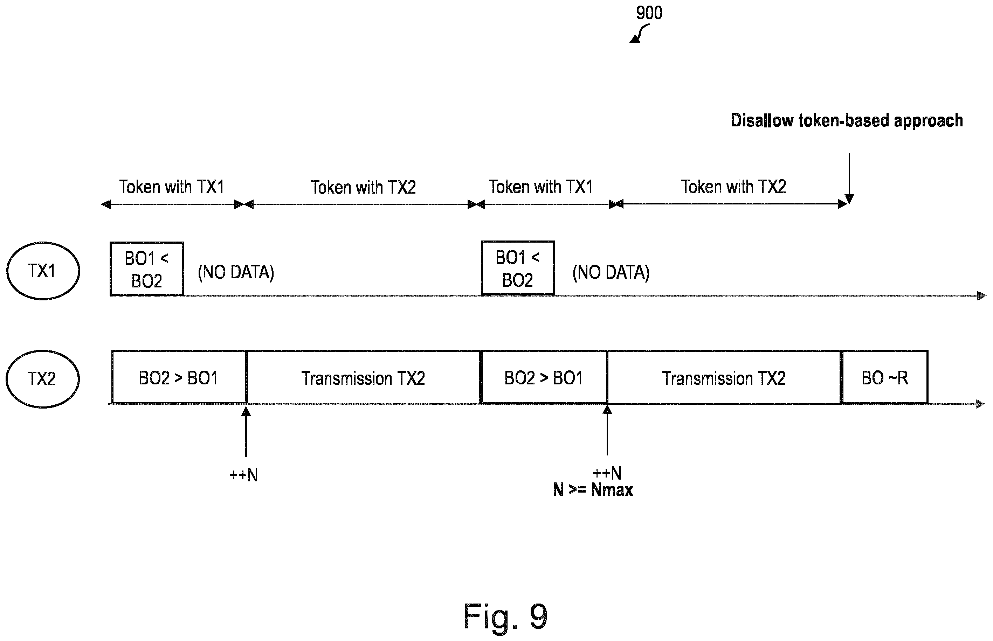

**FIG. 9** illustrates the status 900 of the access to the communication channel by the transmitters TX1 and TX2 during the concurrent execution of the first backoff based transmission operation.

The present method may particularly be advantageous when significant inter-BSS activity is detected. For that purpose, the method of FIG. 9 may allow activating or deactivating this feature in a dynamic manner. In particular, the feature is activated when significant inter-BSS activity is detected (e.g., the list of neighboring BSSs "O" contains more than 1 BSS's apparatus). On detecting lack of activity, neighboring BSSs can be removed from the list "O" if no activity is detected from them. The lack of inter-BSS activity can be detected after observing that the BO of the device of interest has not been interrupted by a given participating BSS for at least Nmax times. This is the case with TX2 in FIG. 9 which has not been interrupted by TX1 which did not transmit data in any of the first transmission phases. When that occurs, the neighboring BSS's apparatus (e.g., TX1) is removed from the list "O". When "O" is empty, then the regular BO computation is adopted to shorten the duration of idle periods. The example of FIG. 9 may provide a dynamic ON/OFF mechanism.

An alternative implementation of the the function *f_{P}*() may be provided as follows.

To avoid sticking to a predefined order imposed by the BSS colour, the BSS colour {*Cᵢ*}_{0,...,*N*} may be replaced in the function *f_{P}*() by {*Hᵢ*}_{0,...,*N*}, which is obtained using another function *g*() that takes as input the list of BSS colours of the BSSs involved ({*Cᵢ*}_{0,*..*,*N*}) and an optional random seed s to generate a unique value for each BSS. *g*() can be, for instance, a hash function (e.g., SHA-256) that gets an ordered list of BSS colors as input, where the color of the device of interest is put at the beginning of the list and the rest of colors are appended in ascending order. An illustrative example of the computation of *g*() is given below for 3 access points (APs) using colors 0001, 0010, and 0011, respectively:
- AP1 (color 0010): H1 = g(0010|0001|0011|*SS*)
- AP2 (color 0001): H2 = g(0001|0010|0011|*SS*)
- AP3 (color 0011): H3 = g(0011|0001|0010|*SS*)

Such a hashing mechanism may provide strong guarantees that each AP will obtain a unique value and that no collisions will occur. As a fallback mechanism, a random seed SS (appended to the end of the input) allows for breaking dependencies in the hash function. In the case an unlikely collision is noticed, a new value for *SS* is randomly computed and shared with the rest of the APs. Then, function *f_{P}*() schedules APs according to their output and a given scheduling policy *P.* Following the previous example for a simple Round Robin realization of *P,* if the computations given by *g*() lead to *H*3 *< H*1 < *H*2, then *L* = {AP3, AP1, AP2}.

In **FIG. 10****,** a block circuit diagram illustrating a configuration of an apparatus 1070 is shown, which is configured to implement at least part of the present subject matter. The apparatus may be a user equipment or an access point for wireless communication. It is to be noted that the apparatus 1070 shown in FIG. 10 may comprise several further elements or functions besides those described herein below, which are omitted herein for the sake of simplicity as they are not essential for the understanding. Furthermore, the apparatus may be also another device having a similar function, such as a chipset, a chip, a module etc., which can also be part of an apparatus or attached as a separate element to the apparatus 1070, or the like. The apparatus 1070 may comprise a processing function or processor, or controller 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example.

Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and programs to be executed by the processor 1071 and/or as a working storage of the processor 1071.

The processor 1071 is configured to execute processing related to the above described subject matter. In particular, the apparatus 1070 may be configured to perform the method as described in connection with FIG. 1, 2, 3, 4 or 5.

For example, the processor 1071 is configured to perform the first backoff based transmission operation.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

## Claims

1. An apparatus for transmission of data in a communication channel of a first wireless network, the apparatus comprising at least one processor; and at least one memory storing instructions that, when executed by the at least one processor, cause the apparatus at least to perform a first backoff based transmission operation comprising:
determining a set of interfering apparatuses that are configured for accessing the communication channel to transmit data, the set of apparatuses comprising the apparatus;
ranking the set of apparatuses by transmission priority resulting in an order; and
performing a channel access operation comprising:
setting a backoff timer based on a current order of the apparatus and
starting the backoff timer, thereby triggering the apparatus to transmit data, referred to as first transmission, when the backoff timer expires;
sensing the communication channel for a second transmission by a second apparatus of the set of apparatuses;
in case the second transmission occurs, halting the backoff timer while the second transmission occurs.

2. The apparatus of claim 1, wherein the channel access operation further comprises:
upon earliest termination of the first transmission or of the second transmission, repeating the ranking of the set of apparatuses based on the earliest terminated transmission, wherein the instructions, when executed by the at least one processor, further cause the apparatus to repeatedly perform the channel access operation.

3. The apparatus of claim 2, wherein the repetition of the channel access operation is performed until a criterion is fulfilled, wherein the criterion requiring any one of: the apparatus being disconnected from the first wireless network, or a maximum number of iterations being reached.

4. The apparatus of claim 1, 2 or 3, wherein the set of interfering apparatuses comprises apparatuses of the first wireless network; and further comprises one or more apparatuses of one or more second wireless networks neighbouring to the first wireless network.

5. The apparatus of any of the preceding claims, wherein the instructions, when executed by the at least one processor, further cause the apparatus to perform the first backoff based transmission operation concurrently with an execution of the first backoff based transmission operation at at least one apparatus of the set of apparatuses.

6. The apparatus of any of the preceding claims, wherein the instructions, when executed by the at least one processor, further cause the apparatus to perform the ranking in accordance with a scheduling policy and compute a duration of the backoff timer in accordance with a function, wherein the scheduling policy and the function are shared among the set of apparatuses for enabling a concurrent execution of the first backoff based transmission operation at each further apparatus of the set of apparatuses.

7. The apparatus of any of the preceding claims, wherein the instructions, when executed by the at least one processor, further cause the apparatus to perform the ranking in accordance with a scheduling policy and compute the duration of the backoff time in accordance with a function, wherein the scheduling policy and the function are shared among a subset of apparatuses of the set of apparatuses for enabling a concurrent execution of the first backoff based transmission operation at each further apparatus of the subset of apparatuses.

8. The apparatus of any of the preceding claims, the set of apparatuses comprising one or more apparatuses of the first wireless network and the one or more apparatuses of the one or more second wireless networks neighbouring of the first wireless network, wherein the instructions, when executed by the at least one processor, further cause the apparatus to perform at least one of the following:
the ranking such that the highest ordered apparatus is alternated between different wireless networks, or
the ranking such that the highest ordered apparatus of each wireless network is alternated between apparatuses of the wireless network.

9. The apparatus of any of the preceding claims, wherein the instructions, when executed by the at least one processor, further cause the apparatus to compute at least one of the following: a duration of the backoff timer using the number of the set of apparatuses, the current order of the apparatus, or a contention window.

10. The apparatus of any of the preceding claims 2 to 8, wherein the instructions, when executed by the at least one processor, further cause the apparatus to stop the performing of the first backoff transmission operation, in response to the halting being performed a number of times smaller than a threshold, during a predefined time period.

11. The apparatus of any of the preceding claims 2 to 9, wherein the instructions, when executed by the at least one processor, further cause the apparatus to: in response to the number of times the halting associated with a second apparatus being smaller than a threshold, remove the second apparatus from the set of apparatuses; and in response to the number of the set of apparatuses being smaller than a threshold, stop the performing of the first backoff transmission operation.

12. The apparatus of any of the preceding claims, wherein the instructions, when executed by the at least one processor, further cause the apparatus to stop the performing of the first backoff transmission operation in case the number of the set of apparatuses is smaller than a threshold.

13. The apparatus of any of the preceding claims, the first wireless network being a basic service set (BSS), wherein the set of apparatuses comprises at least one access point and/or at least one station of interfering BSSs; and
the determining of the set of apparatuses is performed by sensing inter-BSS transmissions to identify a presence of overlapping BSSs that are used to form the set of apparatuses.

14. A method for transmission of data by an apparatus in a communication channel of a first wireless network, the method comprising a first backoff based transmission operation comprising:
determining a set of interfering apparatuses that are configured for accessing the communication channel to transmit data, the set of apparatuses comprising the apparatus;
ranking the set of apparatuses by transmission priority resulting in an order;
performing a channel access operation comprising:
setting a backoff timer based on a current order of the apparatus and starting the backoff timer, thereby triggering the apparatus to transmit data, referred to as first transmission, when the backoff timer expires;
sensing the communication channel for a second transmission by a second apparatus of the set of apparatuses;
in case the second transmission occurs, halting the backoff timer while the second transmission occurs.

15. A computer program comprising instructions for causing an apparatus for performing at least the following:
determining a set of interfering apparatuses that can transmit data on a communication channel, the set of apparatuses comprising the apparatus;
ranking the set of apparatuses by transmission priority;
performing a channel access operation comprising:
setting a backoff timer based on a current order of the apparatus and starting the backoff timer, thereby triggering the apparatus to transmit data, referred to as first transmission, when the backoff timer expires;
sensing the communication channel for a potential second transmission by a second apparatus of the set of apparatuses;
halting the backoff timer during the second transmission if the second transmission occurs.
